# EUROPÄISCHE PATENTSCHRIFT

(11) **EP 2 922 722 B1**
(45) Veröffentlichungstag und Bekanntmachung des Hinweises auf die Patenterteilung: **06.09.2017**
(21) Anmeldenummer: 13780338.3
(22) Anmeldetag: 17.10.2013
(51) Int. Cl.: B60L 3/00, B60L 3/04, B60T 7/12, B60L 11/18, B60L 15/20, H02J 7/00

(54) **SICHERHEITSVORRICHTUNG ZUM ÜBERWACHEN EINES AUFLADENS EINES ELEKTRISCHEN ENERGIESPEICHERS EINES KRAFTFAHRZEUGES, UND ZUM ÜBERWACHEN EINE FAHRZEUGBEWEGUNG WÄHREND DES AUFLADENS UND VERFAHREN ZUM BETREIBEN DER SICHERHEITSVORRICHTUNG**
SAFETY APPARATUS FOR MONITORING CHARGING OF AN ELECTRICAL ENERGY STORE IN A MOTOR VEHICLE, AND FOR MONITORING VEHICLE MOVEMENT DURING CHARGING AND METHOD FOR OPERATING THE SAFETY APPARATUS
DISPOSITIF DE SÉCURITÉ POUR LA SURVEILLANCE D'UNE CHARGE D'UN ACCUMULATEUR D'ÉNERGIE ÉLECTRIQUE D'UN VÉHICULE AUTOMOBILE ET POUR LA SURVEILLANCE D'UN MOUVEMENT PENDENT LA CHARGE ET PROCÉDÉ DE FONCTIONNEMENT DU DISPOSITIF DE SÉCURITÉ

(30) Priorität: 20.11.2012 DE 102012221123
(43) Veröffentlichungstag der Anmeldung: 30.09.2015
(73) Patentinhaber: Robert Bosch GmbH, 70442 Stuttgart (DE)
(72) Erfinder: PARGA-CACHEIRO, Jose-Luis, 71522 Backnang (DE)
(86) Internationale Anmeldenummer: PCT/EP2013/071717
(87) Internationale Veröffentlichungsnummer: WO 2014/079630

(56) Entgegenhaltungen:
- WO-A1-2013/129218
- DE-A1-102008 039 955
- DE-A1-102010 054 927
- DE-A1-102011 078 869
- JP-A- H0 218 141
- JP-A- 2007 189 769
- JP-A- 2009 118 658
- KR-A- 20120 031 610
- US-A1- 2010 072 946
- US-A1- 2011 227 714

## Beschreibung

Die vorliegende Erfindung betrifft eine Sicherheitsvorrichtung zum Überwachen eines Aufladens eines elektrischen Energiespeichers eines Kraftfahrzeuges und ein Verfahren zum Betreiben einer Sicherheitsvorrichtung zum Überwachen eines Aufladens eines elektrischen Energiespeichers eines Kraftfahrzeuges.

Aus der US 2011/227714 A1 ist eine Steuervorrichtung bekannt, welche derart eingerichtet ist, dass der Druck in einem Bremssystem erhöht wird, wenn ein externes Ladekabel angeschlossen ist und die Feststellbremse gelöst ist.

Die WO 2013/129218 A1 offenbart eine Vorrichtung zum Einschränken einer Fahrzeugbewegung während einer Verbindung mit einem Ladekabel.

### Stand der Technik

Bei Kraftfahrzeugen mit Verbrennungsmotor können die meisten Steuergeräte beim Abstellen des Fahrzeugs nach einer möglichen geringen Nachlaufzeit abgeschaltet werden. Im Gegensatz dazu kommt bei Elektrofahrzeugen ein neuer Betriebszustand im Vergleich zu Fahrzeugen mit Verbrennungsmotor hinzu - die Aufladung der Batterien.

Insbesondere Elektrofahrzeuge oder Hybridfahrzeuge, sog. Plug-In-Hybride, weisen einen Energiespeicher auf, der aus dem elektrischen Netz nachgeladen werden kann. Solche Fahrzeuge weisen einen Netzanschluss zur Nachladung des elektrischen Energiespeichers auf, häufig in Form einer Steckverbindung auf. Während des Vorgangs des Aufladens wird das Kraftfahrzeug über ein Ladekabel an eine Spannungsversorgung angeschlossen.

Die DE 10 2010 062 369 A1 beschreibt eine Ladevorrichtung ohne Potentialtrennung für Kraftfahrzeuge: mit einer ersten schaltbaren Trennvorrichtung, welche dazu ausgebildet ist, mindestens die stromdurchflossenen Leiter eines Ladekabels, welches die Ladevorrichtung mit einem Versorgungsnetz koppelt, zu öffnen und/oder zu schließen, um eine Potentialtrennung zwischen Fahrzeugmasse und Neutralleiter des Ladekabels herzustellen oder aufzuheben.

Ferner umfasst die dort beschriebene Ladevorrichtung eine zweite schaltbare Trennvorrichtung, welche dazu ausgebildet ist, mindestens eine Leitung, welche eine Fahrzeughochvoltbatterie mit der Ladevorrichtung und/oder einem Fahrzeugbordnetz verbindet zu öffnen und/oder zu schließen; und eine Überwachungsvorrichtung, welche dazu ausgebildet ist, einen Fehlerzustand der Ladevorrichtung oder des Kraftfahrzeugs zu überwachen und der ersten und/oder der zweiten Trennvorrichtung in Abhängigkeit des Fehlerzustands einen Stellsignal zu übermitteln.

Die DE 10 2009 001 962 A1 beschreibt ein Ladesystem zur Verwendung in einem Fahrzeug mit Fahrzeugmasse auf Erdpotential, umfassend ein Fahrzeughochvoltnetz, enthaltend eine Hochvoltbatterie mit Batterietrennvorrichtung, sowie gegebenenfalls einen oder mehrere Verbraucher; ein mit der Hochvoltbatterie leitend verbundenes, in das Fahrzeug integrierbares Ladegerät mit Netztrennvorrichtung, welches über Netzstecker mit einem Ladestromnetz verbindbar ist.

Ferner umfasst das dort beschriebene Ladesystem einen oder mehrere FI-Schutzschalter zur Fehlerstromüberwachung während eines Ladevorgangs, wobei die FI-Schutzschalter derart angeordnet sind, dass das Ladesystem von einem angeschlossenen Ladestromnetz über die FI-Schutzschalter trennbar ist, einen Schutzleiter, der mit der Fahrzeugmasse verbindbar ist, sowie Mittel zur permanenten Schutzleiterfunktionsüberwachung während eines Ladevorgangs, wobei das Mittel derart ausgestaltet ist, dass bei Beeinträchtigung der Schutzleiterfunktion die Batterietrennvorrichtung der Hochvoltbatterie und die Netztrennvorrichtung des Ladegeräts auslösbar sind.

Darüber hinaus sind bei dem dort beschriebenen Ladesystem Mittel zur Isolationsüberwachung des Fahrzeughochvoltnetzes und des Ladegerätes vor dem Start eines Ladevorgangs vorgesehen, wobei die Mittel derart ausgestaltet sind, dass bei Detektion eines Isolationsfehlers die Batterietrennvorrichtung der Hochvoltbatterie und die Netztrennvorrichtung des Ladegeräts auslösbar sind.

### Offenbarung der Erfindung

Die vorliegende Erfindung betrifft eine Sicherheitsvorrichtung zum Überwachen eines Aufladens eines elektrischen Energiespeichers eines Kraftfahrzeuges mit den Merkmalen des Patentanspruchs 1 und ein Verfahren zum Betreiben einer Sicherheitsvorrichtung zum Überwachen eines Aufladens eines elektrischen Energiespeichers eines Kraftfahrzeuges mit den Merkmalen des Patentanspruchs 9.

Demgemäß ist eine Sicherheitsvorrichtung zum Überwachen eines Aufladens eines elektrischen Energiespeichers eines Kraftfahrzeuges vorgesehen wie in Anspruch 1 definiert.

Gemäß einem weiteren Aspekt der vorliegenden Erfindung ist ein Verfahren zum Betreiben einer Sicherheitsvorrichtung zum Überwachen eines Aufladens eines elektrischen Energiespeichers eines Kraftfahrzeuges gemäß Anspruch 9 vorgesehen.

### Vorteile der Erfindung

Der Kern der Erfindung liegt darin, eine Überwachung von Kraftfahrzeugbewegungen während des Aufladens des elektrischen Energiespeichers des Kraftfahrzeuges nicht mit allen Sensoreinrichtungen des Kraftfahrzeuges gleichzeitig durchzuführen, sondern vielmehr nur eine Sensoreinrichtung oder zumindest nur eine Teilmenge der Sensoreinrichtungen des Kraftfahrzeuges zu aktivieren und zur Überwachung von Kraftfahrzeugbewegungen während des Aufladens des elektrischen Energiespeichers des Kraftfahrzeuges zu verwenden.

Die nicht eingesetzten Sensoreinrichtungen sind für eine vorbestimmte Zeitdauer abgeschaltet, d.h. die Überwachung wird nur unter Verwendung der Teilmenge der eingeschalteten Sensoreinrichtungen vorgenommen.

Wird hierbei eine Bewegung des Kraftfahrzeuges festgestellt, so kann die Sicherheitsvorrichtung entweder direkt entsprechende Maßnahmen einleiten, d. h. eine Aktoreinrichtung des Kraftfahrzeuges ansteuern, oder die Versorgung der restlichen, ausgeschalteten Sensoreinrichtungen aktivieren, um die Bewegung des Kraftfahrzeuges zu verifizieren. Dadurch kann vorteilhaft eine Fehlfunktion des Ladekabels aufgrund eines Entfernens des Kraftfahrzeuges von der stationären Ladestation während des Aufladens des elektrischen Energiespeichers des Kraftfahrzeuges vermieden werden.

Die Sensoreinrichtungen des Kraftfahrzeuges können von Zeit zu Zeit in einem Rotationsverfahren wechselweise oder abwechselnd aktiviert und deaktiviert werden, so dass immer unterschiedliche Sensoreinrichtungen in abwechselnder Reihenfolge während des Aufladens des Kraftfahrzeuges aktiviert sind.

Da somit nicht alle Sensoreinrichtungen des Kraftfahrzeuges während des gesamten Aufladens des elektrischen Energiespeichers des Kraftfahrzeuges aktiv und/oder in Betrieb sind, verringert sich vorteilhaft die jeweilige Betriebsdauer der einzelnen Sensoreinrichtungen des Kraftfahrzeuges.

Da das Aufladen des elektrischen Energiespeichers des Kraftfahrzeuges länger dauert, als ein Fahrzyklus, erhöht sich dadurch die Anforderung an die Lebensdauer der Sensoreinrichtungen und der Steuereinrichtungen erheblich. Der Einsatz der Sicherheitsvorrichtung mit dem Rotationsverfahren verringert in vorteilhafter Weise die jeweils benötigte Einsatzdauer oder Einschaltdauer der einzelnen Sensoreinrichtungen des Kraftfahrzeuges.

Vorteilhafte Ausführungsformen und Weiterbildungen ergeben sich aus den Unteransprüchen sowie aus der Beschreibung unter Bezugnahme auf die Figuren.

Gemäß einer Ausführungsform der Erfindung ist vorgesehen, dass die Steuerungseinrichtung ferner dazu ausgebildet ist, falls durch die Steuerungseinrichtung basierend auf einem der bereitgestellten Sensorsignale eine Bewegung des Kraftfahrzeuges erfasst wird, die mindestens eine zweite deaktivierte Sensoreinrichtung zu aktivieren und dadurch die erfasste Bewegung des Kraftfahrzeuges zu verifizieren. Dies erlaubt vorteilhaft, eine Bewegung des Kraftfahrzeuges mit einer erhöhten Sicherheit und Zuverlässigkeit festzustellen.

Gemäß einer Ausführungsform der Erfindung ist vorgesehen, dass die Steuerungseinrichtung ferner dazu ausgebildet ist, das abwechselnde Aktivieren und Deaktivieren der mindestens einen ersten Sensoreinrichtung und der mindestens einen zweiten Sensoreinrichtung nach einer vorbestimmten Zeitdauer vorzunehmen. Dies erlaubt eine einfache und sichere Steuerung der mindestens zwei Sensoreinrichtungen der Sicherheitsvorrichtung.

Gemäß einer Ausführungsform der Erfindung ist vorgesehen, dass die Steuerungseinrichtung ferner dazu ausgebildet ist, das abwechselnde Aktivieren und Deaktivieren der mindestens einen ersten Sensoreinrichtung und der mindestens einen zweiten Sensoreinrichtung anhand eines vorbestimmten Rotationsverfahrens vorzunehmen. Dadurch kann vorteilhaft die Belastung und die Beanspruchung der mindestens zwei Sensoreinrichtungen der Sicherheitsvorrichtung gleichmäßig und in ausgeglichener Weise auf die mindestens zwei Sensoreinrichtungen verteilt werden.

Gemäß einer Ausführungsform der Erfindung ist vorgesehen, dass mindestens eine der mindestens einen ersten Sensoreinrichtung und der mindestens einen zweiten Sensoreinrichtung eine Sensoreinheit und eine Signalwandlereinheit aufweist. Dadurch können vorteilhaft unterschiedliche Sensoreinheiten der mindestens zwei Sensoreinrichtungen mit entsprechend an die jeweilige Sensoreinheit angepassten Signalwandlereinheiten angesteuert werden.

Gemäß einer Ausführungsform der Erfindung ist vorgesehen, dass die Sicherheitsvorrichtung ferner eine Speichereinrichtung aufweist, welche dazu ausgebildet ist, jeweils eine bisher erreichte Einschaltdauer einer Sensoreinrichtung der mindestens einen ersten Sensoreinrichtung und der mindestens einen zweiten Sensoreinrichtung abzuspeichern. Dadurch kann vorteilhaft eine erreichte Einschaltdauer der Sensoreinrichtung jeweils einzeln für jede der mindestens zwei Sensoreinrichtungen erfasst werden und in der Speichereinrichtung der Sicherheitsvorrichtung abgespeichert werden.

Gemäß einer Ausführungsform der Erfindung ist vorgesehen, dass die Sensoreinheit als ein Drehzahlsensor ausgebildet ist. Dadurch kann auf einfache und sicher Weise eine Bewegung des Kraftfahrzeuges anhand einer Bewegung einer Fahrzeugachse erfasst werden.

Gemäß einer Ausführungsform der Erfindung ist vorgesehen, dass die mindestens eine Aktoreinrichtung als ein elektronisches Bremssystem des Kraftfahrzeuges ausgebildet ist. Dadurch kann vorteilhaft eine Bewegung des Kraftfahrzeuges während des Aufladens des elektrischen Energiespeichers des Kraftfahrzeuges auf zuverlässige Weise abgestoppt werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Sicherheitsvorrichtung zum Überwachen eines Aufladens eines elektrischen Energiespeichers eines Kraftfahrzeuges gemäß einer Ausführungsform der Erfindung; und
- Fig. 2: eine schematische Darstellung eines Flussdiagramms eines Verfahrens zum Betreiben einer Sicherheitsvorrichtung zum Überwachen eines Aufladens eines elektrischen Energiespeichers eines Kraftfahrzeuges gemäß einer weiteren Ausführungsform der Erfindung.

In den Figuren der Zeichnung bezeichnen gleiche Bezugszeichen gleiche oder funktionsgleiche Elemente, Bauteile, Komponenten oder Verfahrensschritte, soweit nichts Gegenteiliges angegeben ist.

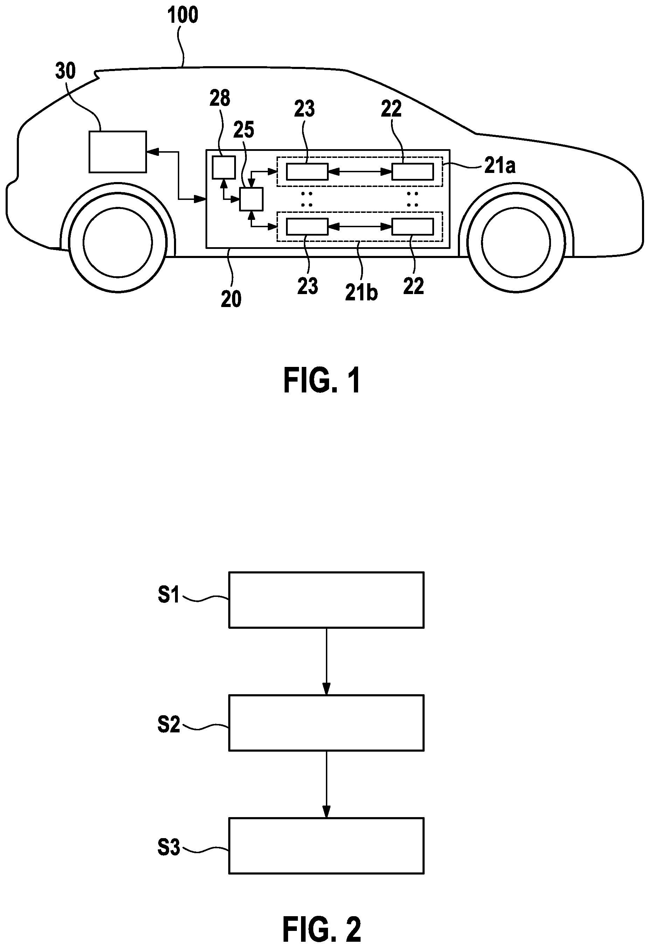

Die Figur 1 zeigt eine schematische Darstellung einer Sicherheitsvorrichtung zum Überwachen eines Aufladens eines elektrischen Energiespeichers eines Kraftfahrzeuges gemäß einer Ausführungsform der Erfindung.

Als das aufzuladende Kraftfahrzeug 100 kann ein Elektrofahrzeug oder ein Hybridkraftfahrzeug oder ein sonstiges Kraftfahrzeug ausgebildet sein, welches einen elektrischen Energiespeicher aufweist, welcher während eines Aufladens des Kraftfahrzeuges 100 von einer stationären Ladestation oder von einer Ladesäule aufgeladen werden kann.

Der elektrische Energiespeicher des Kraftfahrzeuges 100 ist beispielsweise als ein Lithium-Ionen-Akkumulator oder als ein Lithium-Polymer-Akkumulator oder als ein Nickel-Cadmium-Akkumulator oder als ein Nickel-Metallhydrid-Akkumulator oder als ein sonstiger Akkumulator ausgebildet.

Eine Sicherheitsvorrichtung 20 zum Überwachen eines Aufladens eines elektrischen Energiespeichers eines Kraftfahrzeuges 100 umfasst beispielsweise mindestens zwei Sensoreinrichtungen, d. h. mindestens eine erste Sensoreinrichtung 21a und mindestens eine zweiten Sensoreinrichtung 21b, und eine Steuereinrichtung 25.

Die mindestens zwei Sensoreinrichtungen 21a, 21b können jeweils dazu ausgebildet sein, Bewegungsdaten des Kraftfahrzeuges 100 zu erfassen und als ein Sensorsignal bereitzustellen.

Als die Bewegungsdaten des Kraftfahrzeuges 100 können von der Steuerungseinrichtung 25 Daten zu einer Position des Kraftfahrzeuges 100, Daten zu einer Geschwindigkeit des Kraftfahrzeuges 100 oder Daten zu einer aktuell vorherrschenden Drehzahl einer Achse des Kraftfahrzeuges 100 erfasst werden.

Die Steuerungseinrichtung 25 der Sicherheitsvorrichtung 20 kann mit den mindestens zwei Sensoreinrichtungen 21a, 21b gekoppelt sein und dazu ausgebildet sein, mindestens eine Sensoreinrichtung 21a, 21b oder eine Teilmenge der mindestens zwei Sensoreinrichtungen 21a, 21b zu aktivieren oder zu deaktivieren.

Ferner kann die Steuerungseinrichtung 25 der Sicherheitsvorrichtung 20 dazu ausgebildet sein, falls durch die Steuerungseinrichtung 25 basierend auf einem der bereitgestellten Sensorsignale eine Bewegung des Kraftfahrzeuges 100 erfasst wird, mindestens eine Aktoreinrichtung 30 des Kraftfahrzeuges 100 anzusteuern, um das Kraftfahrzeug 100 abzubremsen, und dadurch das Aufladen des elektrischen Energiespeichers des Kraftfahrzeuges 100 zu überwachen.

Darüber hinaus kann die Steuerungseinrichtung 25 dazu ausgebildet sein, falls durch die Steuerungseinrichtung 25 basierend auf dem bereitgestellten Sensorsignal eine Bewegung des Kraftfahrzeuges 100 erfasst wird, mindestens eine deaktivierte Sensoreinrichtung 21a, 21b der mindestens zwei Sensoreinrichtungen 21a, 21b zu aktivieren und dadurch die erfasste Bewegung des Kraftfahrzeuges 100 zu verifizieren.

Die mindestens zwei Sensoreinrichtungen 21a, 21b der Sicherheitsvorrichtung 20 können beispielsweise jeweils eine Sensoreinheit 22 und/oder eine Signalwandlereinheit 23 aufweisen.

Ferner kann die Sicherheitsvorrichtung 20 eine Speichereinrichtung 28 aufweisen, welche dazu ausgebildet ist, jeweils eine bisher erreichte Betriebsdauer oder eine bisher erreichte Einschaltdauer einer Sensoreinrichtung 21a, 21b der mindestens zwei Sensoreinrichtungen 21a, 21b abzuspeichern.

Die Steuerungseinrichtung 25 der Sicherheitsvorrichtung 20 kann ferner dazu ausgebildet sein, anhand der in der Speichereinrichtung 28 abgespeicherten Betriebsdauern der Sensoreinrichtungen 21a, 21b eine Betriebsstrategie für den weiteren Einsatz der mindestens zwei Sensoreinrichtungen 21a, 21b und/oder eine Betriebsstrategie für ein Rotationsverfahren zum abwechselnden Einsatz der mindestens zwei Sensoreinrichtungen 21a, 21b der Sicherheitsvorrichtung 20 zu ermitteln.

Die mindestens zwei Sensoreinrichtungen 21a, 21b des Kraftfahrzeuges 100 können ferner einen Drehzahlsensor oder einen sonstigen Bewegungssensor als die Sensoreinheit 22 aufweisen. Beispielsweise ist bei einem einzelnen Rad des Kraftfahrzeuges 100 ein Drehzahlsensor ausgebildet, welcher eine Drehung des jeweiligen Rades um einen vorbestimmten Winkelbereich oder eine Drehzahl des jeweiligen Rades des Kraftfahrzeuges 100 erfassen kann.

Die jeweiligen Signalwandlereinheiten 23 der mindestens zwei Sensoreinrichtungen 21a, 21b der Sicherheitsvorrichtung 20 sind beispielsweise als integrierte Auswerteeinrichtungen zum Auswerten von Sensorsignalen der Sensoreinheiten 22 der Sicherheitsvorrichtung 20 ausgebildet, welche in einem in dem Kraftfahrzeug 100 vorhandenen Fahrdynamikregelungssystem vorhanden sind.

Die Signalwandlereinheiten 23 der mindestens zwei Sensoreinrichtungen 21a, 21b können beispielsweise als eine elektrische Verstärkerschaltung für die Sensoreinheiten 22 zur Signal-Aufbereitung und/oder Signal-Normierung der von der Sensoreinheit 22 erzeugten Spannungssignale ausgebildet sein.

Beispielsweise ist die mindestens eine Aktoreinrichtung 30 als ein elektronisches Bremssystem des Kraftfahrzeuges 100 oder als ein sonstiges System zum Abbremsen oder Abstoppen des Kraftfahrzeuges 100 ausgebildet. Ferner kann die Aktoreinrichtung 30 als eine Kupplungseinrichtung des Kraftfahrzeuges 100 oder als ein Automatik-Schaltgetriebe des Kraftfahrzeuges 100 ausgebildet sein.

Die Aktoreinrichtung 30 kann von der Sicherheitsvorrichtung 20 über ein fahrzeuginternes Bussystem des Kraftfahrzeuges 100, beispielsweise ein CAN-Bussystem, angesteuert werden. Ebenso können die mindestens zwei Sensoreinrichtungen 21a, 21b der Sicherheitsvorrichtung 20 mit der Steuerungseinrichtung 25 der Sicherheitsvorrichtung 20 über ein solches fahrzeuginternes Bussystem des Kraftfahrzeuge 100 gekoppelt sein.

Die Steuerungseinrichtung 25 der Sicherheitsvorrichtung 20 kann als eine programmgesteuerte Vorrichtung oder als ein Mikrocontroller oder als ein konfigurierbarer Logikbaustein oder als ein integrierter Schaltkreis oder als ein anwendungsspezifischer integrierter Schaltkreis oder als ein Computer oder als ein eingebettetes System ausgebildet sein.

Die Speichereinrichtung 28 der Sicherheitsvorrichtung 20 kann als ein Datenspeicher oder als ein Halbleiterspeicher ausgebildet sein, wobei in und auf einem Halbleitersubstrat mikroelektronische Speicherstrukturen ausgebildet werden und die in der Speichereinrichtung 28 abzuspeichernden Daten in Form von binären elektronischen Schaltzuständen in den derart ausgebildeten integrierten Schaltungen gespeichert werden.

Die Steuerungseinrichtung 25 der Sicherheitsvorrichtung 20 und/oder die mindestens zwei Sensoreinrichtungen 21a, 21b und/oder die Speichereinrichtung 28 der Sicherheitsvorrichtung 20 sind beispielsweise als netzwerkmäßig verbundene technische Komponenten ausgebildet.

Die Figur 2 zeigt eine schematische Darstellung eines Flussdiagramms eines Verfahrens zum Betreiben einer Sicherheitsvorrichtung 20 zum Überwachen eines Aufladens eines elektrischen Energiespeichers eines Kraftfahrzeuges 100 gemäß einer weiteren Ausführungsform der Erfindung.

Als ein erster Verfahrensschritt des Verfahrens zum Betreiben einer Sicherheitsvorrichtung 20 erfolgen ein Erfassen S1 von Bewegungsdaten des Kraftfahrzeuges 100 und ein Bereitstellen eines Sensorsignals mit Hilfe von mindestens einer ersten Sensoreinrichtung 21a und mindestens einer zweiten Sensoreinrichtung 21b.

Als ein zweiter Verfahrensschritt des Verfahrens zum Betreiben einer Sicherheitsvorrichtung 20 erfolgt ein Deaktivieren S2 der mindestens einen zweiten Sensoreinrichtung 21b während des Aufladens des elektrischen Energiespeichers.

Falls durch die Steuerungseinrichtung 25 basierend auf einem der bereitgestellten Sensorsignale eine Bewegung des Kraftfahrzeuges 100 erfasst wird, erfolgt als ein dritter Verfahrensschritt des Verfahrens zum Betreiben einer Sicherheitsvorrichtung ein Ansteuern S3 von mindestens einer Aktoreinrichtung 30 des Kraftfahrzeuges 100, um das Kraftfahrzeug 100 abzubremsen, um dadurch das Aufladen des elektrischen Energiespeichers des Kraftfahrzeuges 100 zu überwachen.

Die Verfahrensschritte können dabei in beliebiger Reihenfolge, iterativ oder rekursiv, wiederholt werden. Das Verfahren zum Überwachen eines Aufladens eines elektrischen Energiespeichers eines Kraftfahrzeuges 100 kann beispielsweise von der Sicherheitsvorrichtung 20 des Kraftfahrzeuges 100 durchgeführt werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Sicherheitsvorrichtung (20) zum Überwachen eines Aufladens eines elektrischen Energiespeichers eines Kraftfahrzeuges (100), mit:
- mindestens einer ersten Sensoreinrichtung (21a) und mindestens einer zweiten Sensoreinrichtung (21b), welche beide jeweils dazu ausgebildet sind, Bewegungsdaten des Kraftfahrzeuges (100) zu erfassen und als ein jeweiliges Sensorsignal bereitzustellen; und
- einer Steuerungseinrichtung (25), welche mit der mindestens einen ersten Sensoreinrichtung (21a) und mit der mindestens einen zweiten Sensoreinrichtung (21b) gekoppelt ist, und welche dazu ausgebildet ist, abwechselnd nur jeweils eine der mindestens zwei ersten Sensoreinrichtung (21a) und der mindestens einen zweiten Sensoreinrichtung (21b) während des Aufladens des elektrischen Energiespeichers zu aktivieren und die jeweils andere zu deaktivieren und, falls durch die Steuerungseinrichtung (25) basierend auf dem bereitgestellten Sensorsignal der aktivierten Sensoreinrichtung eine Bewegung des Kraftfahrzeuges (100) erfasst wird, mindestens eine Aktoreinrichtung (30) des Kraftfahrzeuges (100) anzusteuern, um das Kraftfahrzeug (100) abzubremsen.

2. Sicherheitsvorrichtung (20) nach Anspruch 1,
**dadurch gekennzeichnet,**
**dass** die Steuerungseinrichtung (25) ferner dazu ausgebildet ist, falls durch die Steuerungseinrichtung (25) basierend auf dem bereitgestellten Sensorsignal der aktivierten Sensoreinrichtung eine Bewegung des Kraftfahrzeuges (100) erfasst wird, die deaktivierte Sensoreinrichtung zu aktivieren und dadurch die erfasste Bewegung des Kraftfahrzeuges (100) zu verifizieren.

3. Sicherheitsvorrichtung (20) nach Anspruch 1 oder 2,
**dadurch gekennzeichnet,**
**dass** die Steuerungseinrichtung (25) ferner dazu ausgebildet ist, das abwechselnde Aktivieren und Deaktivieren der mindestens einen ersten Sensoreinrichtung (21a) und der mindestens einen zweiten Sensoreinrichtung (21b) nach einer vorbestimmten Zeitdauer vorzunehmen.

4. Sicherheitsvorrichtung (20) nach einem der Ansprüche 1 oder 2,
**dadurch gekennzeichnet,**
**dass** die Steuerungseinrichtung (25) ferner dazu ausgebildet ist, das abwechselnde Aktivieren und Deaktivieren der mindestens einen ersten Sensoreinrichtung (21a) und der mindestens einen zweiten Sensoreinrichtung (21b) anhand eines vorbestimmten Rotationsverfahrens vorzunehmen.

5. Sicherheitsvorrichtung (20) nach einem der vorhergehenden Ansprüche,
**dadurch gekennzeichnet,**
**dass** mindestens eine der mindestens einen ersten Sensoreinrichtung (21a) und der mindestens einen zweiten Sensoreinrichtung (21b) eine Sensoreinheit (22) und eine Signalwandlereinheit (23) aufweist.

6. Sicherheitsvorrichtung (20) nach Anspruch 6,
**dadurch gekennzeichnet,**
**dass** die Sensoreinheit (22) als ein Drehzahlsensor ausgebildet ist.

7. Sicherheitsvorrichtung (20) nach einem der vorhergehenden Ansprüche,
**dadurch gekennzeichnet,**
**dass** die Sicherheitsvorrichtung (20) ferner eine Speichereinrichtung (28) aufweist, welche dazu ausgebildet ist, jeweils eine bisher erreichte Einschaltdauer einer Sensoreinrichtung der mindestens einen ersten Sensoreinrichtung (21a) und der mindestens einen zweiten Sensoreinrichtung (21b) abzuspeichern.

8. Sicherheitsvorrichtung (20) nach einem der vorhergehenden Ansprüche,
**dadurch gekennzeichnet,**
**dass** die mindestens eine Aktoreinrichtung (30) als ein elektronisches Bremssystem des Kraftfahrzeuges (100) ausgebildet ist.

9. Verfahren zum Betreiben einer Sicherheitsvorrichtung (20) zum Überwachen eines Aufladens eines elektrischen Energiespeichers eines Kraftfahrzeuges (100) mit folgenden Verfahrensschritten:
- Erfassen (S1) von Bewegungsdaten des Kraftfahrzeuges (100) und Bereitstellen eines jeweiligen Sensorsignals mit Hilfe von mindestens einer ersten Sensoreinrichtung (21a) und mindestens einer zweiten Sensoreinrichtung (21b);
wobei abwechselnd nur jeweils eine der mindestens einen ersten Sensoreinrichtung (21a) und der die mindestens einen zweiten Sensoreinrichtung (21b) während des Aufladens des elektrischen Energiespeichers aktiviert wird und die jeweils andere deaktiviert (S2) wird
- Ansteuern (S3) von mindestens einer Aktoreinrichtung (30) des Kraftfahrzeuges (100), falls durch die Steuerungseinrichtung (25) basierend auf dem bereitgestellten Sensorsignal der aktivierten Sensoreinrichtung eine Bewegung des Kraftfahrzeuges (100) erfasst wird, um das Kraftfahrzeug (100) abzubremsen.

## Claims

1. Safety device (20) for monitoring charging of an electrical energy store of a motor vehicle (100), having:
- at least one first sensor device (21a) and at least one second sensor device (21b) which are both each designed to detect movement data of the motor vehicle (100) and to provide it as a respective sensor signal; and
- a control device (25) which is coupled to the at least one first sensor device (21a) and to the at least one second sensor device (21b) and which is designed in each case to alternately activate only one of the at least two first sensor device (21a) and the at least one second sensor device (21b) during charging of the electrical energy store and deactivate the respective other device and, if a movement of the motor vehicle (100) is detected by the control device (25) on the basis of the sensor signal provided by the activated sensor device, to actuate at least one actuator device (30) of the motor vehicle (100) in order to brake the motor vehicle (100).

2. The safety device (20) according to Claim 1,
**characterized**
**in that** the control device (25) is also designed to activate the deactivated sensor device, and hence to verify the detected movement of the motor vehicle (100), if a movement of the motor vehicle (100) is detected by the control device (25) on the basis of the sensor signal provided by the activated sensor device.

3. Safety device (20) according to Claim 1 or 2,
**characterized**
**in that** the control device (25) is also designed to perform the alternating activation and deactivation of the at least one first sensor device (21a) and the at least one second sensor device (21b) after a predetermined time period.

4. Safety device (20) according to either of Claims 1 and 2,
**characterized**
**in that** the control device (25) is also designed to perform the alternating activation and deactivation of the at least one first sensor device (21a) and the at least one second sensor device (21b) on the basis of a predetermined rotation method.

5. Safety device (20) according to any of the preceding claims,
**characterized**
**in that** at least one of the at least one first sensor device (21a) and the at least one second sensor device (21b) has a sensor unit (22) and a signal converter unit (23).

6. Safety device (20) according to Claim 6,
**characterized**
**in that** the sensor unit (22) is designed as a rotational-speed sensor.

7. Safety device (20) according to any of the preceding claims,
**characterized**
**in that** the safety device (20) also has a memory device (28) which is designed to store in each case a switch-on time which has already been achieved up to now of a sensor device of the at least one first sensor device (21a) and the at least one second sensor device (21b).

8. Safety device (20) according to any of the preceding claims,
**characterized**
**in that** the at least one actuator device (30) is designed as an electronic braking system of the motor vehicle (100).

9. Method for operating a safety device (20) for monitoring charging of an electrical energy store of a motor vehicle (100), having the following method steps:
- detecting (S1) movement data of the motor vehicle (100) and providing a respective sensor signal using at least one first sensor device (21a) and at least one second sensor device (21b);
wherein in each case alternately only one of the at least one first sensor device (21a) and the the at least one second sensor device (21b) is activated during charging of the electrical energy store and the respective other device is deactivated (S2)
- actuating (S3) at least one actuator device (30) of the motor vehicle (100) if a movement of the motor vehicle (100) is detected by the control device (25) on the basis of the sensor signal provided by the activated sensor device in order to brake the motor vehicle (100).

## Revendications

1. Appareil de sécurité (20) destiné à surveiller une charge d'un accumulateur d'énergie électrique d'un véhicule automobile (100), comprenant :
- au moins un premier dispositif capteur (21a) et au moins un deuxième dispositif capteur (21b) qui sont tous deux configurés respectivement pour collecter des données de mouvement du véhicule automobile (100) et les mettre à disposition sous la forme d'un signal de capteur correspondant ; et
- un dispositif de commande (25) qui est connecté à l'au moins un premier dispositif capteur (21a) et à l'au moins un deuxième dispositif capteur (21b) et qui est configuré pour n'activer en alternance respectivement que l'un parmi l'au moins deux premier dispositif capteur (21a) et l'au moins un deuxième dispositif capteur (21b) pendant la charge de l'accumulateur d'énergie électrique et pour désactiver l'autre et, dans le cas où un mouvement du véhicule automobile (100) est détecté par le dispositif de commande (25) sur la base du signal de capteur mis à disposition du dispositif capteur activé, pour commander au moins un dispositif actionneur (30) du véhicule automobile (100) afin de freiner le véhicule automobile (100).

2. Appareil de sécurité (20) selon la revendication 1, **caractérisé en ce que** le dispositif de commande (25) est en outre configuré, dans le cas où un mouvement du véhicule automobile (100) est détecté par le dispositif de commande (25) sur la base du signal de capteur mis à disposition du dispositif capteur activé, pour activer le dispositif capteur désactivé et vérifier ainsi le mouvement détecté du véhicule automobile (100).

3. Appareil de sécurité (20) selon la revendication 1 ou 2, **caractérisé en ce que** le dispositif de commande (25) est en outre configuré pour effectuer l'activation et la désactivation en alternance de l'au moins un premier dispositif capteur (21a) et de l'au moins un deuxième dispositif capteur (21b) en fonction d'une durée prédéfinie.

4. Appareil de sécurité (20) selon l'une des revendications 1 ou 2, **caractérisé en ce que** le dispositif de commande (25) est en outre configuré pour effectuer l'activation et la désactivation en alternance de l'au moins un premier dispositif capteur (21a) et de l'au moins un deuxième dispositif capteur (21b) au moyen d'un procédé de rotation prédéfini.

5. Appareil de sécurité (20) selon l'une des revendications précédentes, **caractérisé en ce qu'**au moins un parmi l'au moins un premier dispositif capteur (21a) et de l'au moins un deuxième dispositif capteur (21b) possède une unité de détection (22) et une unité de conversion de signal (23).

6. Appareil de sécurité (20) selon la revendication 6, **caractérisé en ce que** l'unité de détection (22) est réalisé sous la forme d'un capteur de vitesse de rotation.

7. Appareil de sécurité (20) selon l'une des revendications précédentes, **caractérisé en ce que** l'appareil de sécurité (20) possède en outre un dispositif de mémorisation (28) qui est configuré pour mettre respectivement en mémoire une durée de mise en circuit d'un dispositif capteur atteinte jusqu'alors par l'au moins un premier dispositif capteur (21a) et l'au moins un deuxième dispositif capteur (21b).

8. Appareil de sécurité (20) selon l'une des revendications précédentes, **caractérisé en ce que** l'au moins un dispositif actionneur (30) est réalisé sous la forme d'un système de freinage électronique du véhicule automobile (100).

9. Procédé pour faire fonctionner un appareil de sécurité (20) destiné à surveiller une charge d'un accumulateur d'énergie électrique d'un véhicule automobile (100), comprenant les étapes suivantes :
- collecte (S1) de données de mouvement du véhicule automobile (100) et mise à disposition d'un signal de capteur correspondant à l'aide d'au moins un premier dispositif capteur (21a) et d'au moins un deuxième dispositif capteur (21b) ;
un seul parmi l'au moins un premier dispositif capteur (21a) et le l'au moins un deuxième dispositif capteur (21b) étant activé en alternance pendant la charge de l'accumulateur d'énergie électrique et l'autre étant respectivement désactivé (S2)
- commande (S3) d'au moins un dispositif actionneur (30) du véhicule automobile (100) dans le cas où un mouvement du véhicule automobile (100) est détecté par le dispositif de commande (25) sur la base du signal de capteur mis à disposition par le dispositif capteur activé, afin de freiner le véhicule automobile (100).
